# EUROPÄISCHE PATENTANMELDUNG

(11) **EP 4 847 799 A1**
(43) Veröffentlichungstag der Anmeldung: **02.12.2026**
(21) Anmeldenummer: 25178773.5
(22) Anmeldetag: 26.05.2025
(51) Int. Cl.: F16H 1/28, F16H 37/04, F16H 49/00

(54) **AXIAL KOMPAKTES GETRIEBE MIT EINEM PLANETENGETRIEBE UND EINEM WELLGETRIEBE**

(71) Anmelder: Maxon International AG, 6072 Sachseln (CH)
(72) Erfinder: von Lehmann, Ernst, 79286 Glottertal (DE)
(74) Vertreter: Grünecker Patent- und Rechtsanwälte PartG mbB

(57) **Zusammenfassung**

Die vorliegende Erfindung betrifft ein Getriebe mit einem Planetengetriebe und einem Wellgetriebe, wobei das Planetengetriebe ein Hohlrad und mindestens eine Planetenstufe aufweist, wobei jede Planetenstufe ein Sonnenrad, zumindest ein Planetenrad sowie einen Planetenträger umfasst und in jeder Planetenstufe das zumindest eine Planetenrad mit dem Sonnenrad und dem Hohlrad kämmt und an dem Planetenträger um eine relativ zum Planetenträger ortsfeste Planetenradachse drehbar gelagert angeordnet ist, und das Wellgetriebe einen Wellgenerator, einen Flextopf und ein Circular Spline aufweist, wobei das Planetengetriebe zumindest teilweise radial innerhalb des Flextopfs angeordnet ist. Erfindungsgemäß ist vorgesehen, dass das Hohlrad einteilig mit dem Wellgenerator oder drehfest mit dem Wellgenerator verbunden ausgeführt ist, wobei der Planetenträger einer in Abtriebsrichtung letzten Planetenstufe drehfest mit dem Flextopf verbunden ist oder einteilig mit dem Flextopf ausgeführt ist.

## Beschreibung

Die vorliegende Erfindung betrifft ein Getriebe mit einem Planetengetriebe und einem Wellgetriebe nach dem Oberbegriff des Anspruchs 1.

Ein gattungsgemäßes Getriebe umfasst ein Planetengetriebe und ein Wellgetriebe, wobei das Planetengetriebe ein Hohlrad und mindestens eine Planetenstufe aufweist, wobei jede Planetenstufe ein Sonnenrad, zumindest ein Planetenrad sowie einen Planetenträger umfasst und in jeder Planetenstufe das zumindest eine Planetenrad mit dem Sonnenrad und dem Hohlrad kämmt und an dem Planetenträger um eine relativ zum Planetenträger ortsfeste Planetenradachse drehbar gelagert angeordnet ist, und das Wellgetriebe einen Wellgenerator, einen Flextopf und ein Circular Spline aufweist, wobei das Planetengetriebe zumindest teilweise radial innerhalb des Flextopfs angeordnet ist.

Ein Getriebe nach dem Oberbegriff des unabhängigen Anspruchs 1 ist beispielsweise in EP 3 351 826 A1 beschrieben. Bei diesem Getriebe bildet der Planetenträger einer in einer in Abtriebsrichtung letzten Planetenstufe den Wellgenerator aus, wobei der Wellgenerator zusätzlich auf dem Hohlrad des Planetengetriebes drehbar gelagert ist, und der Circular Spline bildet einen Abtrieb des Getriebes aus. Dadurch kann das Getriebe in axialer Richtung kompakt ausgebildet sein und das Getriebe kann auf baulich einfache Weise mehrere Planetenstufen des Planetengetriebes enthalten.

Es hat sich aber gezeigt, dass ein Bedarf nach alternativen Getrieben, die sowohl ein Planetengetriebe und Wellgetriebe umfassen, besteht, die hohe Gesamtuntersetzungen erreichen und die axial besonders kompakt aufgebaut sein können.

Aufgabe der vorliegenden Erfindung ist es entsprechend, ein Getriebe mit Planetengetriebe und Wellgetriebe anzugeben, das die oben genannten Anforderungen erfüllt.

Die Aufgabe wird gelöst durch die Merkmale des unabhängigen Anspruchs 1. Demnach liegt bei einem Getriebe gemäß dem Oberbegriff des unabhängigen Anspruchs 1 dann eine erfindungsgemäße Lösung der Aufgabe vor, wenn das Hohlrad einteilig mit dem Wellgenerator oder drehfest mit dem Wellgenerator verbunden ausgeführt ist, wobei der Planetenträger einer in Abtriebsrichtung letzten Planetenstufe drehfest mit dem Flextopf verbunden ist oder einteilig mit dem Flextopf ausgeführt ist.

Durch die erfindungsgemäße Lösung kann das Hohlrad des Planetengetriebes zumindest teilweise, insbesondere vollständig, radial innerhalb des Flextopfs angeordnet sein, wodurch ein kompakter axialer Aufbau des Getriebes erreicht wird. Daneben erlaubt das Zusammenspiel des Planetengetriebes und des Wellgetriebes im erfindungsgemäßen Getriebe eine hohe Gesamtuntersetzung bei einer, insbesondere axial, sehr kompakten Bauweise des Getriebes.

Falls das Planetengetriebe des erfindungsgemäßen Getriebes eine einzelne Planetenstufe aufweist, bildet die in Abtriebsrichtung letzte Planetenstufe gleichzeitig die in Abtriebsrichtung erste Planetenstufe aus. Entsprechend bezieht sich dann jede Planetenstufe auf die eine einzelne Planetenstufe.

Weiter weist ein Außendurchmesser des Hohlrads und damit ein Außendurchmesser des Wellgenerators die notwendige elliptische Form auf, um als Wellgenerator zu dienen.

Vorteilhafte Ausführungsformen der vorliegenden Erfindung sind Gegenstand der Unteransprüche.

Gemäß einer besonders bevorzugten Ausführungsform der vorliegenden Erfindung ist das Hohlrad des Planetengetriebes radial innerhalb des Flextopfs angeordnet.

Gemäß einer besonders bevorzugten Ausführungsform der vorliegenden Erfindung ist ein Abtrieb des Getriebes drehfest mit dem Planetenträger der in Abtriebsrichtung letzten Planetenstufe verbunden oder bildet der Planetenträger der in Abtriebsrichtung letzten Planetenstufe den Abtrieb des Getriebes aus. Dadurch ist der Abtrieb auf baulich einfache Weise an die Kombination aus Wellgetriebe und Planetengetriebe angeschlossen.

Gemäß einer weiteren besonders bevorzugten Ausführungsform der vorliegenden Erfindung bildet das Sonnenrad der in Abtriebsrichtung ersten Planetenstufe einen Antrieb des Getriebes aus. Dadurch kann der Antrieb des Getriebes auf baulich einfache Weise an einen Motor angeschlossen werden.

Gemäß einer weiteren besonders bevorzugten Ausführungsform der vorliegenden Erfindung weist das Planetengetriebe mindestens zwei, vorzugsweise zwei, Planetenstufen auf, wobei bei direkt aufeinanderfolgenden Planetenstufen der Planetenträger der einen Planetenstufe mit dem Sonnenrad der anderen Planetenstufe drehfest miteinander verbunden oder integral ausgebildet ist. Dadurch kann die Gesamtuntersetzungen des Getriebes erhöht werden. Gleichzeitig erlaubt der Aufbau des Getriebes einen kompakten axialen Aufbau des Getriebes trotz mindestens zwei, vorzugsweise zwei, Planetenstufen des Planetengetriebes.

Gemäß einer weiteren Ausführungsform der vorliegenden Erfindung ist der Circular Spline mittels eines Lagers, insbesondere mittels eines ersten Wälzlagers, drehbar auf dem Abtrieb gelagert.

Dies ermöglicht einen sehr kompakten und stabilen Aufbau des Getriebes. Daneben kann dadurch der Flextopf auf baulich einfache Weise gegenüber dem Circular Spline zentriert werden.

Vorzugsweise ist dabei abtriebsseitig zu dem Lager eine Dichtung zwischen dem Circular Spline und dem Abtrieb angeordnet, die eine Drehung des Abtriebs gegenüber dem Circular Spline zulässt.

Gemäß einer weiteren Ausführungsform der vorliegenden Erfindung weist das Getriebe ein Getriebegehäuse auf, wobei der Circular Spline einen Abschnitt des Getriebegehäuses ausbildet. Dadurch kann auch die radiale Ausdehnung des Getriebes kompakt ausgebildet sein. Vorzugsweise ist das Getriebegehäuse derart ausgebildet ist, dass ein Motorgehäuse eines Motors, der das Getriebe antreibt, drehfest mit dem Getriebegehäuse verbindbar ist. Dadurch lässt sich das Getriebe auf baulich einfache Weis an einen Motor, insbesondere Elektromotor, anschließen.

Weiter vorzugsweise ist das Hohlrad der Planetenstufen an einem Ende des Hohlrads entgegen der Abtriebsrichtung drehbar auf einem Gehäuseflansch des Getriebegehäuses, insbesondere mittels eines vierten Wälzlagers, gelagert. Dadurch kann die radiale Lagerung des Hohlrads auf baulich effiziente Weise umgesetzt werden. In einer weiteren bevorzugten Ausführung ist das vierte Wälzlager als Axiallager ausgeführt. Insbesondere ist dabei ein Innendurchmesser eines Lagersitzes des vierten Wälzlagers in radialer Richtung größer als der Aussendurchmesser des vierten Wälzlagers ausgeführt. Dementsprechend nimmt das vierte Wälzlager nur axiale Kräfte auf, wodurch eine Überbestimmung der radialen Lagerung des Hohlrads und des Wellgenerators vermieden werden kann. Vorzugsweise kann der Gehäuseflansch derart ausgebildet sein, dass das Motorgehäuse des Motors, der das Getriebe antreibt, drehfest mit dem Gehäuseflansch verbindbar ist.

Gemäß einer Ausführungsform der vorliegenden Erfindung ist der Planetenträger der in Abtriebsrichtung letzten Planetenstufe radial innerhalb des Flextopfs drehbar auf dem Hohlrad, insbesondere mittels eines zweiten Wälzlagers, gelagert. Hierdurch kann der Bauraum innerhalb des Flextopfes besonders gut ausgenutzt werden. Auch kann dadurch die drehbare Lagerung des Planetenträgers an einer axialen Position der in Abtriebsrichtung letzten Planetenstufe des Planetengetriebes, insbesondere des zumindest einen Planetenrads der in Abtriebsrichtung letzten Planetenstufe des Planetengetriebes, angeordnet werden, wodurch die axiale Kompaktheit zusätzlich erhöht werden kann.

Gemäß einer alternativen Ausführungsform der vorliegenden Erfindung ist das Hohlrad radial innerhalb des Flextopfs drehbar auf dem Planetenträger der in Abtriebsrichtung letzten Planetenstufe, insbesondere mittels eines dritten Wälzlagers, gelagert. Dies ermöglicht einen baulich einfachen Aufbau des Planetenträgers der in Abtriebsrichtung letzten Planetenstufe und, falls der Planetenträger, der in Abtriebsrichtung letzten Planetenstufe den Abtrieb des Getriebes ausbildet, des Abtriebs.

Gemäß einer weiteren Ausführungsform der vorliegenden Erfindung weist der Wellgenerator ein elliptisch verformbares Kugellager auf.

Gemäß einer weiteren besonders bevorzugten Ausführungsform sind das Hohlrad und der Wellgenerator als einzelne Bauelemente ausgeführt und mittels des Prinzips einer Oldham-Kupplung drehfest verbunden. Durch die Verbindung gemäss einer Oldham Kupplung kann eine mögliche Überbestimmung der radialen Lagerung des Hohlrads und des Wellgenerators zwischen dem Circular spline und dem Gehäuseflansch vermieden werden.

Die vorliegende Erfindung stellt auch eine Antriebseinheit mit einem Motor, insbesondere Elektromotor, und einem Getriebe gemäß einem der oberhalb beschriebenen Ausführungsbeispiele des erfindungsgemäßen Getriebes, wobei der Motor einen Antrieb des Getriebes antreibt.

Vorzugsweise treibt der Motor das Sonnenrad der in Abtriebsrichtung ersten Planetenstufe an.

Ebenfalls vorzugsweise weist das Getriebe ein Getriebegehäuse und der Motor ein Motorgehäuse auf, wobei das Motorgehäuse drehfest mit dem Getriebegehäuse verbunden ist.

Nachfolgend werden fünf Ausführungsbeispiele der vorliegenden Erfindung anhand von Zeichnungen näher erläutert.

In den Zeichnungen zeigen:
- Figur 1:: einen Längsschnitt durch ein erstes Ausführungsbeispiel einer erfindungsgemäßen Antriebseinheit mit einem ersten Ausführungsbeispiel eines erfindungsgemäßen Getriebes, und
- Figur 2:: einen Längsschnitt durch ein zweites Ausführungsbeispiel einer erfindungsgemäßen Antriebseinheit mit einem zweiten Ausführungsbeispiel eines erfindungsgemäßen Getriebes, und
- Figur 3:: eine Detailansicht einer Schrägansicht auf einen Schnitt durch das erfindungsgemäße zweite Ausführungsbeispiel aus Figur 2, welcher das Hohlrad, die Oldham-Kupplung und den Wellgenerator schneidet, und
- Figur 4:: einen Längsschnitt durch ein drittes Ausführungsbeispiel einer erfindungsgemäßen Antriebseinheit mit einem dritten Ausführungsbeispiel eines erfindungsgemäßen Getriebes mit einer alternativen Lagerung des Hohlrads auf dem Flansch des Getriebegehäuses, und
- Figur 5:: einen Längsschnitt durch ein viertes Ausführungsbeispiel einer erfindungsgemäßen Antriebseinheit mit einem vierten Ausführungsbeispiel eines erfindungsgemäßen Getriebes ohne Lagerung des Hohlrads auf dem Flansch des Getriebegehäuses, und
- Figur 6:: einen Längsschnitt durch ein fünftes Ausführungsbeispiel einer erfindungsgemäßen Antriebseinheit mit einem fünften Ausführungsbeispiel eines erfindungsgemäßen Getriebes mit alternativer Lagerung des Hohlrads auf dem Planetenträger.
- Figur 7:: einen schematischen Querschnitt durch das erfindungsgemäße Getriebe im Bereich der elliptisch verformbaren Kugellagerung gemäß dem ersten, dritten, vierten und fünften Ausführungsbeispiel.

In den folgenden Abbildungen sind gleiche Teile mit gleichen Bezugszeichen versehen. Sofern eine Figur Bezugszeichen enthält, auf die in der zugehörigen Figurenbeschreibung nicht explizit eingegangen wird, wird auf vorherige oder nachfolgende Figurenbeschreibungen verwiesen.

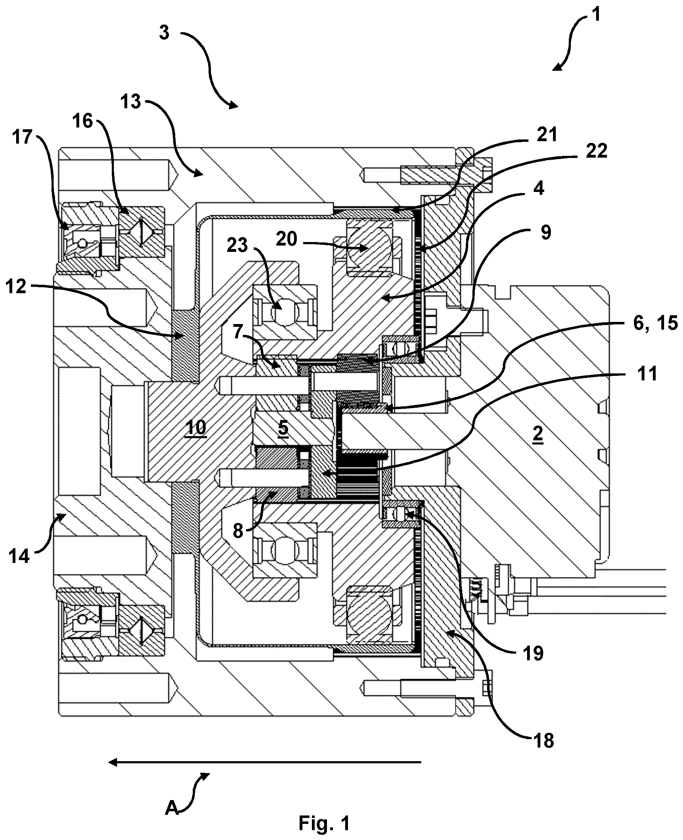

Figur 1 zeigt einen Längsschnitt durch ein erstes Ausführungsbeispiel einer erfindungsgemäßen Antriebseinheit 1 mit einem Elektromotor 2 und einem ersten Ausführungsbeispiel eines erfindungsgemäßen Getriebes 3. Das Getriebe 3 umfasst ein Planetengetriebe und ein Wellgetriebe. Dabei weist das Planetengetriebe ein Hohlrad 4 und zwei Planetenstufen auf, wobei jede Planetenstufe ein Sonnenrad 5, 6, zumindest ein Planetenrad 7, 8, 9 sowie einen Planetenträger 10, 11 umfasst und in jeder Planetenstufe das zumindest eine Planetenrad 7, 8, 9 mit dem Sonnenrad 5, 6 und dem Hohlrad 4 kämmt und an dem Planetenträger 10, 11 um eine relativ zum Planetenträger 10, 11 ortsfeste Planetenradachse drehbar gelagert angeordnet ist. Das Wellgetriebe weist einen Flextopf 12, ein Circular Spline 13 und einen Wellgenerator 4 auf, der einteilig mit dem Hohlrad 4 des Planetengetriebes ausgeführt ist. Dabei ist der Planetenträger 10 einer in Abtriebsrichtung A letzten Planetenstufe drehfest mit dem Flextopf 12 verbunden. Das Hohlrad 4 und eine in Abtriebsrichtung A erste Planetenstufe sind gemäß dem ersten Ausführungsbeispiel vollständig und die in Abtriebsrichtung A letzte Planetenstufe teilweise innerhalb des Flextopfs 12 angeordnet.

Gemäß dem ersten Ausführungsbeispiel des erfindungsgemäßen Getriebes 3 ist ein Abtrieb 14 des Getriebes 3 drehfest mit dem Planetenträger 10 der in Abtriebsrichtung letzten Planetenstufe verbunden und bildet das Sonnenrad 6 der in Abtriebsrichtung A ersten Planetenstufe einen Antrieb 15 des Getriebes aus. Daneben ist der Planetenträger 11 der in Abtriebsrichtung A ersten Planetenstufe drehfest mit dem Sonnenrad der in Abtriebsrichtung A letzten Planetenstufe verbunden. Dabei sind die Planetenträger 10, 11 der zwei Planetenstufen jeweils axial in Abtriebsrichtung zu den jeweiligen Planetenrädern 7, 8, 9 und Sonnenrädern 5, 6 der zwei Stufen angeordnet. Weiter weist die in Abtriebsrichtung A erste Planetenstufe insbesondere drei Planetenräder 9 und die in Abtriebsrichtung A letzte Planetenstufe insbesondere vier Planetenräder 7, 8 auf.

Weiter gemäß dem ersten Ausführungsbeispiel des Getriebes 3 ist der Circular Spline 13 mittels eines ersten Wälzlagers 16 drehbar auf dem Abtrieb 14 gelagert, wobei abtriebsseitig zu dem ersten Wälzlager 16 eine Dichtung 17 zwischen dem Circular Spline 13 und dem Abtrieb 14 angeordnet ist. Die Dichtung 17 ist dabei derart ausgebildet, dass diese eine Drehung des Abtriebs 14 gegenüber dem Circular Spline 13 zulässt. Daneben bildet der Circular Spline 13 einen Abschnitt eines Getriebegehäuses aus, wobei das Getriebegehäuse neben dem Circular Spline 13 ein Gehäuseflansch 18 umfasst, der das Getriebegehäuse in axialer Richtung entgegen der Abtriebsrichtung A abschließt und derart ausgebildet ist, dass ein Motorgehäuse des Elektromotors 2 der Antriebseinheit 1, der den Antrieb 15 des Getriebes 3 antreibt, drehfest mit dem Gehäuseflansch 18 verbunden ist. Weiter ist das Hohlrad 4 an einem Ende des Hohlrads 4 entgegen der Abtriebsrichtung A drehbar auf dem Gehäuseflansch 18 des Getriebegehäuses mittels eines vierten Wälzlagers 19 gelagert.

Wie ebenfalls in der Figur 1 gezeigt, weist gemäß dem ersten Ausführungsbeispiel des Getriebes 3 der Wellgenerator 4 ein elliptisch verformbares Kugellager 20 auf, das radial Innen mit dem Flextopf 12 im Bereich einer Außenverzahnung 21 des Flextopfs 12 in Kontakt steht, wobei die Außenverzahnung 21 des Flextopfs 12 mit einer Innenverzahnung 22 des Circular Spline 13 kämmt.

Weiter ist bei dem ersten Ausführungsbeispiel des Getriebes 3 der Planetenträger 10 der in Abtriebsrichtung A letzten Planetenstufe radial innerhalb des Flextopfs 12 drehbar auf dem Hohlrad 4 mittels eines zweiten Wälzlagers 23 gelagert. Die drehbare Lagerung des Planetenträgers 10 der in Abtriebsrichtung A letzten Planetenstufe erfolgt damit an einer axialen Position der Planetenräder 7, 8 der in Abtriebsrichtung A letzten Planetenstufe des Planetengetriebes.

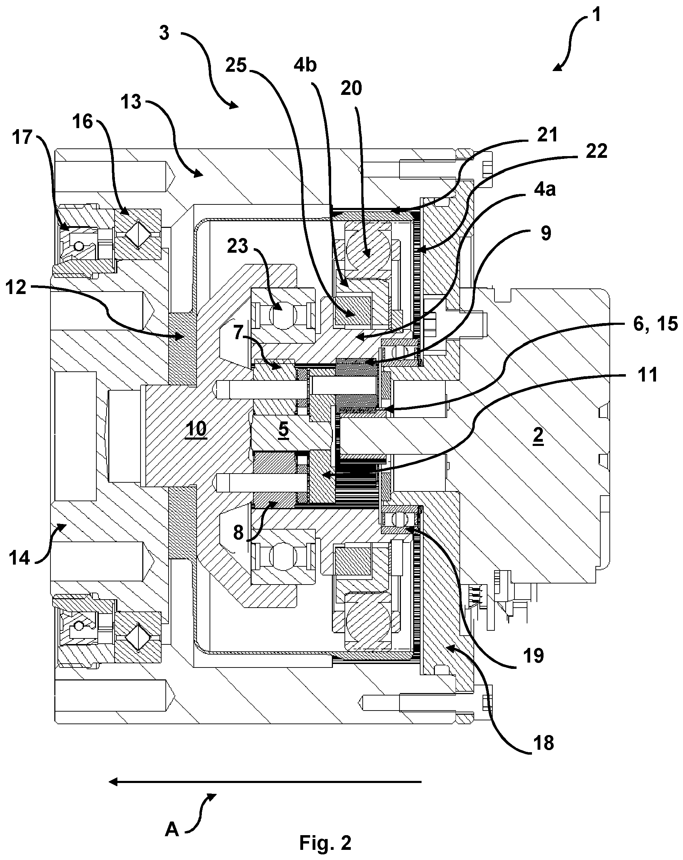

Figur 2 zeigt einen Längsschnitt durch ein zweites Ausführungsbeispiel einer erfindungsgemäßen Antriebseinheit 1 mit einem Elektromotor 2 und einem zweiten Ausführungsbeispiel eines erfindungsgemäßen Getriebes 3. Das Hohlrad 4a und Wellgenerator 4b sind hier als einzelne Bauelemente ausgeführt und drehfest miteinander verbunden. Die Verbindung ist als Oldham Kupplung 25 ausgeführt. Durch die Oldham Kupplung 25 kann eine mögliche Überbestimmung der radialen Lagerung des Hohlrads und des Wellgenerators zwischen dem Circular Spline 13 und dem Gehäuseflansch 18 durch das vierte Wälzlager 19 vermieden werden.

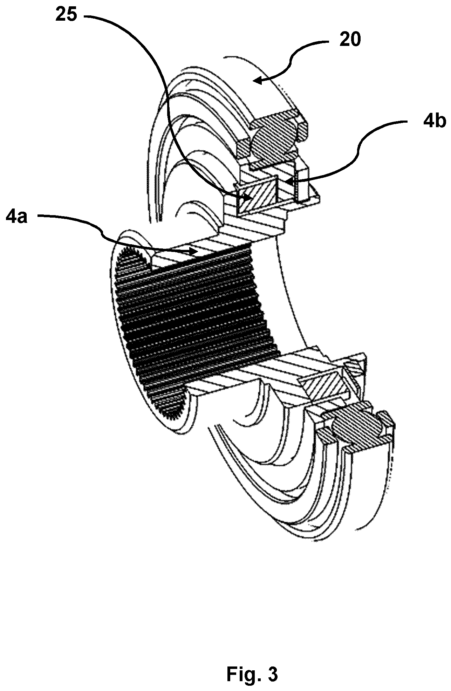

Eine Detailansicht einer Schrägansicht auf einen Schnitt durch das erfindungsgemäße zweite Ausführungsbeispiel aus Figur 2 ist in Figur 3 dargestellt. Das Hohlrad 4a und der Wellgenerator 4b sind als Bauteile einer Oldham Kupplung 25 ausgeführt. Hierdurch ist ein radialer Versatz zwischen Hohlrad 4a und Wellgenerator 4b möglich und eine mögliche Überbestimmung der Lagerung in radialer Richtung kann vermieden werden. Um den Wellgenerator 4b ist ein elliptisch verformbares Kugellager 20 angeordnet.

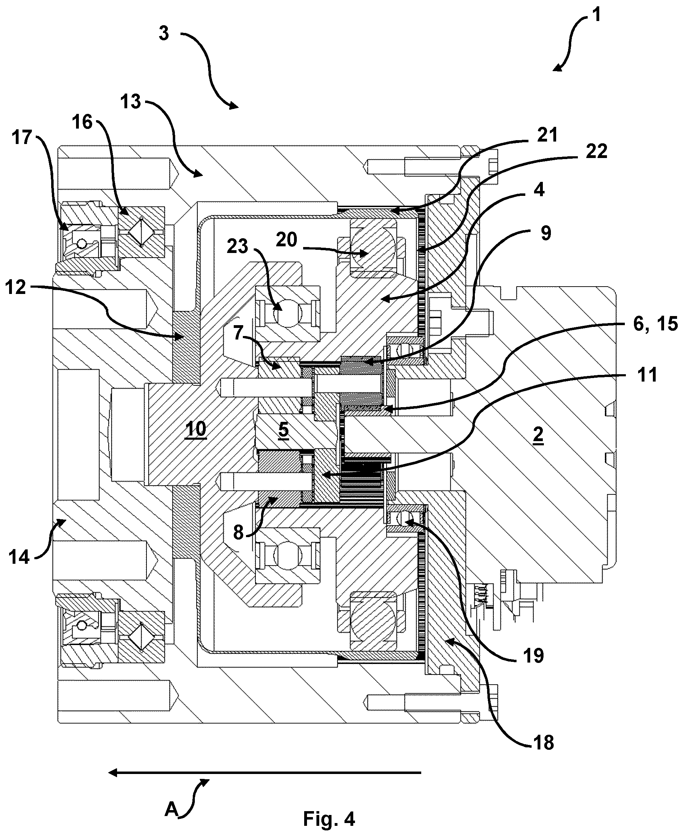

Figur 4 zeigt einen Längsschnitt durch ein drittes Ausführungsbeispiel einer erfindungsgemäßen Antriebseinheit 1 mit einem Elektromotor 2 und einem dritten Ausführungsbeispiel eines erfindungsgemäßen Getriebes 3. Das Hohlrad 4 ist an einem Ende des Hohlrads 4 entgegen der Abtriebsrichtung A drehbar auf dem Gehäuseflansch 18 des Getriebegehäuses mittels des vierten Wälzlagers 19 gelagert, wobei das vierte Wälzlager 19 als Axiallager ausgeführt ist. Ein Innendurchmesser des Lagersitzes des vierten Wälzlagers 19 ist in radialer Richtung größer als ein Aussendurchmesser des vierten Wälzlagers 19 ausgeführt, wodurch das vierte Wälzlager 19 entsprechend nur axiale Kräfte aufnimmt. Das Hohlrad 4 des Planetengetriebes und der Wellgenerator 4 sind einteilig ausgeführt.

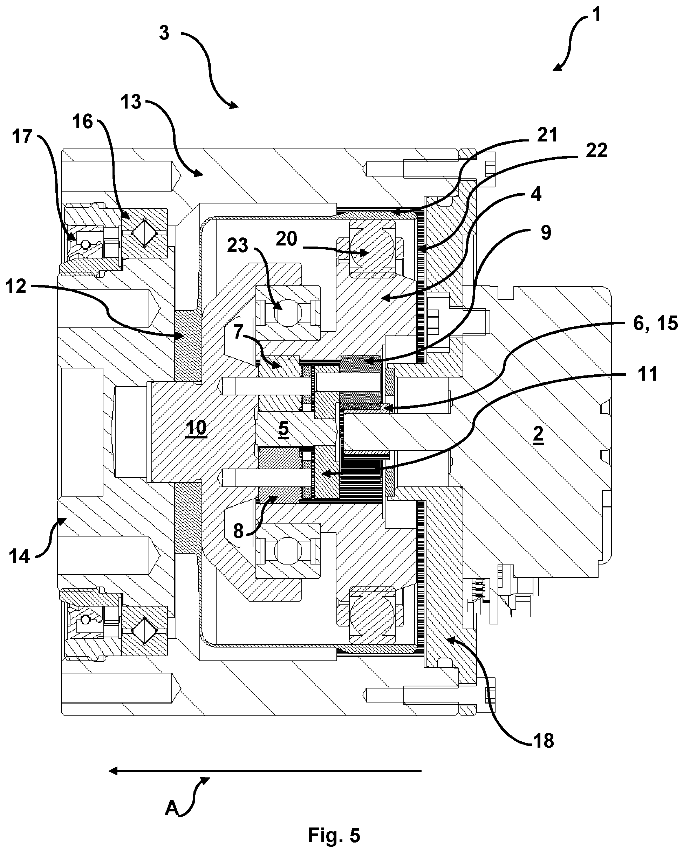

Figur 5 zeigt einen Längsschnitt durch ein viertes Ausführungsbeispiel einer erfindungsgemäßen Antriebseinheit 1 mit einem Elektromotor 2 und einem vierten Ausführungsbeispiel eines erfindungsgemäßen Getriebes 3. Das Hohlrad 4 des Planetengetriebes und der Wellgenerator 4 sind hier ebenfalls einteilig ausgeführt. Das Hohlrad 4 ist an einem Ende des Hohlrads 4 entgegen der Abtriebsrichtung A drehbar zu dem Gehäuseflansch 18 ausgeführt. Im Unterschied zu dem vierten Ausführungsbeispiel ist hier das Hohlrad 4 an einem Ende des Hohlrads 4 entgegen der Abtriebsrichtung A nicht zusätzlich auf dem Gehäuseflansch 18 des Getriebegehäuses mittels eines Wälzlagers gelagert.

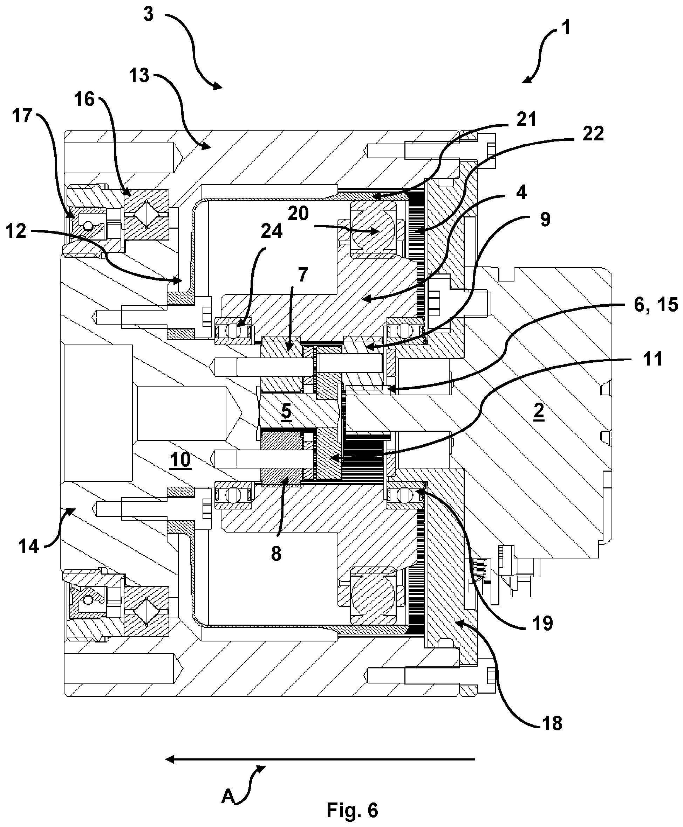

Figur 6 zeigt einen Längsschnitt durch ein fünftes Ausführungsbeispiel einer erfindungsgemäßen Antriebseinheit 1 mit einem Elektromotor 2 und einem fünften Ausführungsbeispiel eines erfindungsgemäßen Getriebes 3. Das fünfte Ausführungsbeispiel unterscheidet sich von den vorherigen Ausführungsbeispielen insbesondere darin, dass der Planetenträger 10 der in Abtriebsrichtung A letzten Planetenstufe als der Abtrieb 14 des Getriebes 3 ausgebildet ist und das Hohlrad 4 radial innerhalb des Flextopfs 12 drehbar auf dem Planetenträger 10 der in Abtriebsrichtung A letzten Planetenstufe mittels eines dritten Wälzlagers 24 gelagert ist.

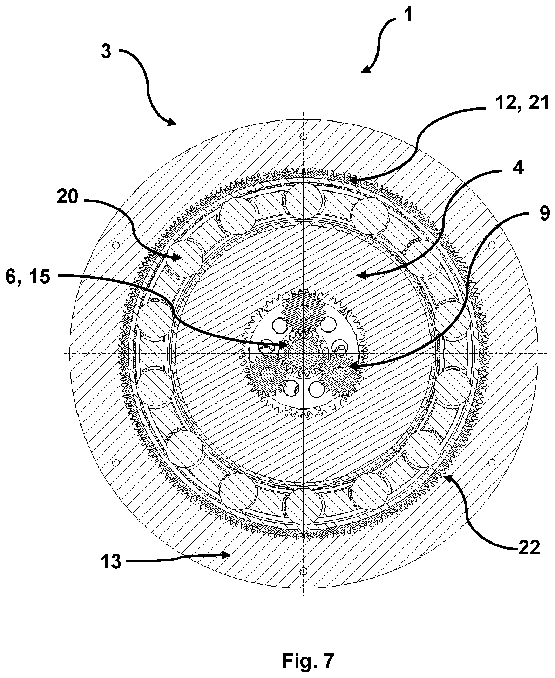

In Figur 7 ist ein schematischer Querschnitt durch das erfindungsgemäße Getriebe im Bereich des elliptisch verformbaren Kugellagers 20 gemäß dem ersten, dritten, vierten oder fünften Ausführungsbeispiel gezeigt. Im Zentrum ist das Planetengetriebe mit dem Sonnenrad 6 der in Abtriebsrichtung A ersten Planetenstufe angeordnet, welches den Antrieb 15 des Getriebes 3 darstellt. Das Sonnenrad 6 treibt die drei Planetenräder 9 der in Abtriebsrichtung A ersten Planetenstufe an. Die Planetenräder 9 sind radial innerhalb des Hohlrads 4 angeordnet, welches einen Außendurchmesser mit einer elliptischen Form aufweist um einteilig als Wellgenerator 4 zu dienen. Der Wellgenerator 4 ist von dem elliptisch verformbaren Kugellager 20 umgeben. Das Wellgetriebe, welches das Planetengetriebe radial umgibt, wird vervollständigt durch den Flextopf 12 und den Circular spline 13, welcher einen Abschnitt des Getriebegehäuses bildet.

### Liste der Bezugszeichen

- 1: Antriebseinheit
- 2: Elektromotor
- 3: Getriebe
- 4: Hohlrad / Wellgenerator
- 4a: Hohlrad
- 4b: Wellgenerator
- 5: Sonnenrad der in Abtriebsrichtung letzten Planetenstufe
- 6: Sonnenrad der in Abtriebsrichtung ersten Planetenstufe
- 7, 8: Planetenräder der in Abtriebsrichtung letzten Planetenstufe
- 9: Planetenrad der in Abtriebsrichtung ersten Planetenstufe
- 10: Planetenträger der in Abtriebsrichtung letzten Planetenstufe
- 11: Planetenträger der in Abtriebsrichtung ersten Planetenstufe
- 12: Flextopf
- 13: Circular Spline
- 14: Abtrieb
- 15: Antrieb
- 16: erstes Wälzlager
- 17: Dichtung
- 18: Gehäuseflansch
- 19: viertes Wälzlager
- 20: elliptisch verformbares Kugellager
- 21: Außenverzahnung
- 22: Innenverzahnung
- 23: zweites Wälzlager
- 24: drittes Wälzlager
- 25: Oldham Kupplung
- A: Abtriebsrichtung

## Patentansprüche

1. Getriebe (3) mit einem Planetengetriebe und einem Wellgetriebe, wobei das Planetengetriebe ein Hohlrad (4, 4a) und mindestens eine Planetenstufe aufweist, wobei jede Planetenstufe ein Sonnenrad (5, 6), zumindest ein Planetenrad (7, 8, 9) sowie einen Planetenträger (10, 11) umfasst und in jeder Planetenstufe das zumindest eine Planetenrad (7, 8, 9) mit dem Sonnenrad (5, 6) und dem Hohlrad (4, 4a) kämmt und an dem Planetenträger (10, 11) um eine relativ zum Planetenträger (10, 11) ortsfeste Planetenradachse drehbar gelagert angeordnet ist, und das Wellgetriebe einen Wellgenerator (4, 4b), einen Flextopf (12) und ein Circular Spline (13) aufweist, wobei das Planetengetriebe zumindest teilweise radial innerhalb des Flextopfs (12) angeordnet ist, **dadurch gekennzeichnet, dass** das Hohlrad (4, 4a) einteilig mit dem Wellgenerator (4) oder drehfest mit dem Wellgenerator (4b) verbunden ausgeführt ist, wobei der Planetenträger (10) einer in Abtriebsrichtung (A) letzten Planetenstufe drehfest mit dem Flextopf (12) verbunden ist oder einteilig mit dem Flextopf (12) ausgeführt ist.

2. Getriebe (3) nach Anspruch 1, **dadurch gekennzeichnet, dass** ein Abtrieb (14) des Getriebes (3) drehfest mit dem Planetenträger (10) der in Abtriebsrichtung (A) letzten Planetenstufe verbunden ist oder der Planetenträger (10) der in Abtriebsrichtung letzten Planetenstufe den Abtrieb (14) des Getriebes (3) ausbildet.

3. Getriebe nach Anspruch 1 oder 2, **dadurch gekennzeichnet, dass** das Sonnenrad (6) einer in Abtriebsrichtung (A) ersten Planetenstufe einen Antrieb (15) des Getriebes (3) ausbildet.

4. Getriebe (3) nach einem der Ansprüche 1 bis 3, **dadurch gekennzeichnet, dass** das Planetengetriebe mindestens zwei, vorzugsweise zwei, Planetenstufen aufweist, wobei direkt aufeinanderfolgenden Planetenstufen der Planetenträger (11) der einen Planetenstufe mit dem Sonnenrad (5) der anderen Planetenstufe drehfest miteinander verbunden oder integral ausgebildet ist.

5. Getriebe (3) nach einem der Ansprüche 2 bis 4, **dadurch gekennzeichnet, dass** der Circular Spline (13) mittels eines Lagers, insbesondere mittels eines ersten Wälzlagers (16), drehbar auf dem Abtrieb (14) gelagert ist, wobei vorzugsweise abtriebsseitig zu dem Lager eine Dichtung (17) zwischen dem Circular Spline (13) und dem Abtrieb (14) angeordnet ist.

6. Getriebe (3) nach einem der Ansprüche 1 bis 5, **dadurch gekennzeichnet, dass** das Getriebe (3) ein Getriebegehäuse aufweist und der Circular Spline (13) einen Abschnitt des Getriebegehäuses ausbildet, wobei das Getriebegehäuse vorzugsweise derart ausgebildet ist, dass ein Motorgehäuse eines Motors, der das Getriebe (3) antreibt, drehfest mit dem Getriebegehäuse verbindbar ist.

7. Getriebe (3) nach Anspruch 6, **dadurch gekennzeichnet, dass** das Hohlrad (4, 4a) an einem Ende des Hohlrads (4, 4a) entgegen der Abtriebsrichtung (A) drehbar auf einem Gehäuseflansch (18) des Getriebegehäuses, insbesondere mittels eines vierten Wälzlagers (19), gelagert ist.

8. Getriebe (3) nach Anspruch 7, **dadurch gekennzeichnet, dass** das vierte Wälzlager als Axiallager ausgeführt ist.

9. Getriebe (3) nach einem der Ansprüche 1 bis 8, **dadurch gekennzeichnet, dass** der Planetenträger (10) der in Abtriebsrichtung (A) letzten Planetenstufe radial innerhalb des Flextopfs (12) drehbar auf dem Hohlrad (4, 4a), insbesondere mittels eines zweiten Wälzlagers (23), gelagert ist.

10. Getriebe (3) nach einem der Ansprüche 1 bis 9, **dadurch gekennzeichnet, dass** das Hohlrad (4) radial innerhalb des Flextopfs (12) drehbar auf dem Planetenträger (10) der in Abtriebsrichtung (A) letzten Planetenstufe, insbesondere mittels eines dritten Wälzlagers (24), gelagert ist.

11. Getriebe (3) nach einem der Ansprüche 1 bis 10, **dadurch gekennzeichnet, dass** der Wellgenerator (4, 4b) ein elliptisch verformbares Kugellager (20) aufweist.

12. Getriebe (3) nach einem der Ansprüche 1 bis 11, **dadurch gekennzeichnet, dass** das Hohlrad (4a) und der Wellgenerator (4b) als einzelne Bauelemente ausgeführt und mittels des Prinzips einer Oldham-Kupplung drehfest verbunden sind.

13. Antriebseinheit (1) mit einem Motor, insbesondere Elektromotor (2), und einem Getriebe (3) nach einem der Ansprüche 1 bis 12, wobei der Motor einen Antrieb (15) des Getriebes (3) antreibt.
